# EUROPEAN PATENT APPLICATION

(11) **EP 2 154 114 A1**
(43) Date of publication of application: **17.02.2010**
(21) Application number: 08161015.6
(22) Date of filing: 23.07.2008
(51) Int. Cl.: C02F 1/42, B01D 27/08, B01D 15/14, B01J 8/02, B01J 47/02, C02F 1/00

(54) **Water treatment unit for beverage production machine**

(71) Applicant: Nestec S.A., 1800 Vevey (CH)
(72) Inventor: Ozanne, Matthieu, 1846 Chessel (CH); Vuagniaux, Didier, 1188 Gimel (CH); Achtnich, Ulrich, 8953 Dietikon (CH)
(74) Representative: Ducreux, Marie

(57) **Abstract**

The invention concerns a water treatment unit comprising :
- a compartment (1) presenting an upper water inlet (6) and a bottom water outlet (7),
- a water distribution plate (3) dividing the compartment in an upper part (2) and a lower part (3), said lower part containing a water treatment substance (4) and said water distribution plate presenting a plurality of holes (8) in the whole plate, said plurality of holes having such a distribution that water introduced through the upper water inlet is induced to flow through the holes that are the more distant from the compartment upper water inlet (6).

## Description

The present invention relates to a water treatment unit for producing water able to be used in a beverage producing device.

It is a well-known problem with any beverage producing device having e.g. a boiler for heating water in order to produce a beverage on the basis of the heated water that the boiler as well as other elements and water heating elements is prone to scale deposition when using the device over a longer period. This scale origins from scale-forming ions contained in the water supply wherein the scale-content is especially high in so-called hard water. To descale (note that the term "descaling" is used in an equivalent matter in the following with the term "decalcification") it is known to periodically have pass through the scale deposition prone tubing a decalcifying agent (e.g. vinegar) which dissolves any deposited scale when passing through the machine. After having such a decalcifying agent passes the machine, it is of course necessary to thoroughly rinse the machine internally in order to avoid a contamination with the decalcifying (descaling) agent when producing subsequently a beverage. A known pre-emptive measure to reduce the scale-deposition resides in a treatment of the supplied water before it actually gets in touch with the boiler and other elements of the beverage producing device. This treatment can e.g. consist in an ion-changing process during which calcium ions are removed from the water and can thus no longer contribute to a following scale formation. From the prior art it is known to use filter cartridges filled with an ion-changing resin. These cartridges are connected with the water tank of the beverage machine so that water to be treated enters in the cartridge and flows through the ion-changing resin. Thus, the water leaving the filter cartridge is substantially void of ions contributing to the scale formation. Such a water treatment can also be implemented with other ion-changing resin than calcium-changing resin in order to eliminate other water components prejudicial to the beverage taste, like for example chlorine.

When the capacity of the ion-changing resin is reached, the filter cartridge must be replaced by a new one. The filter cartridge is disconnected from the water tank and removed from the machine, a new one is installed and it is reconnected with the water tank. It has been observed that after the reconnection of a new filter cartridge the first filling of the filter cartridge with the water is quite long and usually the machine cannot be immediately used. This problem is essentially due to the presence of air caught inside the ion-changing resin and that prevents the rapid flowing of water : as the only outlet for air corresponds to the inlet for water, the flow of water entering in the cartridge prevents air from escaping from the cartridge and the filling of the cartridge is rapidly blocked. This problem has been particularly noticed with filter cartridges presenting a rectangular or square section.

In the prior art it has also been observed that all the volume of the ion-changing resin inside the filter cartridge is not equally traversed by the water to be treated. This problem has been especially noticed in filter cartridge presenting a square or rectangular water traversed section where ion-changing resin placed near from the corners are not traversed. When the filter cartridge is changed, a part of ion-changing resin is thrown although it is still able to work.

The present invention aims at an improved filter cartridge for a water treatment for use in connection with a beverage producing device that can be rapidly filled with water when it is first fitted inside the machine.

Another aim of the present invention is to provide a filter cartridge which reduces the quantity of air trapped in the ion-changing resin during use.

Another aim of the present invention is to provide a filter cartridge in which the whole volume of ion-changing resin is equally traversed by water to increase life time.

According to a first aspect, the invention concerns a water treatment unit comprising:
- a compartment presenting an upper water inlet and a bottom water outlet,
- a water distribution plate dividing the compartment in an upper part and a lower part, said lower part containing a water treatment substance and said water distribution plate presenting a plurality of holes, said plurality of holes having such a distribution that water introduced through the upper water inlet is induced to flow through the holes that are the more distant from the compartment upper water inlet.

The invention of the present invention is adapted for water treatment units which are gravity fed, water being introduced at the upper part and delivered at the lower part of the unit. The main compartment of the water treatment unit is designed for holding the water treatment substance able to treat the water. Said compartment is horizontally divided by a water distribution plate. This water distribution plate helps for distributing water introduced at the compartment water inlet through the water treatment substance. The water distribution plate is a plate covering the whole horizontal section of the compartment. The whole plate is pierced by holes. Said holes are placed in the plate according to a specific distribution which induces water to flow through the holes that are the more distant from the compartment upper water inlet. The distribution concerns simultaneously the size distribution of the holes and the place distribution of the holes.

Said effect for inducing to flow through the holes that are the more distant from the compartment upper water inlet can be reached with a distribution of the plurality of holes in the water distribution plate such that the more distant are the holes from the compartment upper water inlet the bigger their section surface is and/or the numerous they are. According to a mode of the present invention, the water distribution plate can present a distribution of the plurality of holes such that the more distant are the holes from the compartment upper water inlet the bigger is their section surface. Then the holes that are closer to the compartment upper water inlet present a section surface inferior to the section surface of the holes that are closer to the side walls of the compartment. The section surface of the holes can be progressively increased as they are placed farther from the compartment upper water inlet. According to a specific embodiment, the holes in the water distribution plate can be distributed according to globally circular forms centred on the compartment upper water inlet, all holes of a same circular form presenting the same section. According to another mode of the present invention, the water distribution plate can present a distribution of the plurality of holes such that there are fewer holes near from the compartment upper water inlet rather than far from the compartment upper water inlet. According to the invention, the water distribution plate can also be conceived according to a combination of the two above modes, that is the farther the holes are from the compartment upper water inlet, the numerous they are and the bigger is their section surface. Due to the water distribution plate, water introduced from the compartment water inlet can flow simultaneously and equally through all the holes pierced through the plate surface. Then there is no predominant way of the water through the water treatment substance under the water distribution plate and all the water treatment substance is used in an optimum way.

It is preferable that the holes present such a section that they retain the water treatment substance. This embodiment prevents water treatment substance that is usually a powder or small particles to flow upward through the holes and reach the water tank to which the water treatment unit is generally linked which would give a bad aspect to water if the tank walls are transparent. Then holes preferably present a filtering function.

The holes of the water distribution plate can present whatever form. They can all present the same form or different forms according to their place in the plate. In a preferred embodiment, the holes present the form of grooves, the grooves being more numerous and/or longer as they are more distant from the compartment upper water inlet.

In order to get a good flow of water through the water treatment unit, it is usually preferable that the water distribution plate is distant from the compartment top wall, preferably at least 5 mm away from the compartment top wall.

The invention is particularly adapted for compartment which horizontal section presents angles, particularly a square or rectangular section.

Generally the hole of the water distribution plate facing the compartment upper water inlet present a bigger section surface than the holes of the water distribution plate surrounding it. This hole enables air to evacuate from the lower part compartment once water is introduced in the treatment unit. Yet the section surface of this hole must not induce a predominant flow of water through said hole. The section surface of this hole is a compromise between a section surface large enough to enable air escaping and a section surface small enough to prevent water from flowing more through this hole rather than through the other holes of the water distribution plate. A tube can be connected to this hole facing the compartment upper water inlet to lead air outside of the compartment.

The surface of the water distribution plate can be inclined from the point facing the compartment upper water inlet to the edges, preferably according to an angle of at least 5°. The plate point facing the compartment upper water inlet is then a little higher than the edge of the water distribution plate in contact with the compartment side walls.

According to a preferred embodiment of the present invention, the compartment upper water inlet is at the centre of the compartment top side. Then the distribution of the holes in the water distribution plate is made in relation to the centre of the plate.

According to another aspect of the present invention, a channel can link a part of the water inlet with the water outlet. This channel enables the introduction of non treated water from the water tank of the beverage machine in which the present water treatment unit is inserted directly in the water supply means of the beverage machine. The water supply means of the beverage machine is then fed with a mixture of treated water - that has traversed the filter material - and of non-treated water - that has flowed through the direct channel. Such an embodiment permits the exact adjustment of the ions content of the water used for producing beverage in function of the water quality introduced in the water treatment unit, usually tap water. If tap water is highly concentrated in ions, it preferably would not be partly introduced through the channel but totally treated by the filter material. And if tap water presents a low concentration in ions, it would not be necessary to totally treat it to get the same quality of treated water.

The compartment can be divided in vertical sub-compartments under the water distribution plate. This embodiment enables a better distribution of water along the all the height of the compartment and forces water to flow vertically even in the corners of the compartment below the water distribution plate.

Usually the compartment comprises an inside filter element near from the bottom water outlet, said filter element having passages retaining the water treatment substance. Such a filter element can be a filter plate extending through all the compartment horizontal section above the compartment bottom surface. This filter aims at preventing the water treatment substance from leaving the water treatment unit with the treated water.

The water treatment substance can be any substance commonly used in food filter cartridge. Such substance can be designed for a chemical and/or physical interaction with the water. Preferably the substance is a water softening agent for preventing scale formation and chlorine removal agent.

The water treatment unit of the present invention has been described in association with a beverage producing device, yet it could be used with any other machine requiring the use of treated water.

The invention also concerns a beverage production device comprising a water treatment unit as described above, the water inlet of the water treatment unit cooperating with a water tank and the water outlet of the water treatment unit cooperating with the water supply means of the beverage production device. The water supply means usually communicate through pipes with pumping means and heating means in order to provide hot water for the production of beverage. Preferably the water supply means of the beverage production device is a tube able to fit inside the water outlet, preferably through a flexible valve.

The water treatment unit of the present invention is particularly adapted for beverage production machine producing tea beverage because the quality of a tea beverage is quite sensible to the presence of ions in water.

The invention concerns too a water treatment unit comprising a compartment presenting an upper water inlet and a bottom water outlet, said compartment containing a water treatment substance, and comprising a flexible valve placed inside the bottom water outlet, said flexible valve being openable by inserting a tube from the outside through the valve and being closable by removing the tube from the valve.

The invention al concerns the use of a flexible valve to close a water treatment unit compartment water outlet, said valve comprising :
- a valve head presenting an orifice extending through the valve head which opens to permit a tube inserts therethrough and closes to shut off fluid flow therethrough upon removal of the tube,
- a flange near the valve head shaped to seal about the water treatment unit compartment water outlet,
- a valve flange at the basis of the valve shaped to seal about the water treatment unit compartment water outlet.

The water treatment unit of the present invention presents the advantage of being very rapidly filled with water when used for the first time, usually between 15 and 30 seconds. Then, the machine operator can change the water treatment unit and use the machine for preparing a beverage without waiting for a long time.

Besides, the water treatment unit of the present invention enables the elimination of air that can be trapped inside the water treatment substance, limiting the risk of bacteria growth inside said substance, which is critical for a water used for beverage production and which permits to increase the life time of the water treatment unit.

Moreover, due to the better distribution of water through the entire compartment surface, all the water treatment substance volume is available for contacting water and treating it. The lifetime of the water treatment unit is increased.

The invention can be implemented whatever the form of the compartment of the water treatment unit. With time it has been noticed that beverage production machine can take unusual design form, in particular a non circular form presenting angles. The water treatment unit of such a machine can benefit from the above advantages by using a water repartition plate as defined in the present invention which improves the total volume use of the water treatment substance.

Lastly, the use of the flexible valve at the outlet of the water treatment unit compartment provides the advantage of avoiding the leakage of water when the water treatment unit must be removed from the machine. This advantage is due to the quick closing property of the valve. In the prior art, it was known to close the water outlet by a check valve comprising a plunger, a spring and a sealing like an O-ring. The plunger and the O-ring were kept by means of the spring in a closed position when the water treatment unit was removed from the beverage machine. And when the water treatment unit was fixed in the beverage machine, the plunger was pressed upwards by the spring moving away the sealing from its closing position and enabling water to flow along the plunger. The flexible valve of the present invention provides a simpler and cheaper solution than the check valve of the prior art since it is made of a single piece of flexible material.

### Brief description of the drawings

The characteristics and advantages of the invention will be better understood in relation to the figures which follow :
- Figure 1 is a cross-section view of a water treatment unit according to the invention.
- Figure 2a is a perspective view of the water distribution plate of the water treatment unit according to the invention.
- Figure 2b is a upper view of the water distribution plate of the water treatment unit according to the invention.
- Figures 2c and 2d are cross-section views of the water distribution plate of Figures 2a and 2b.
- Figure 3 a cross-section view of a water treatment unit illustrating the use of a by-pass channel.
- Figure 4 and 5 are cross-section views of the water treatment unit water outlet closed by a flexible valve.

### Detailed description of the drawings

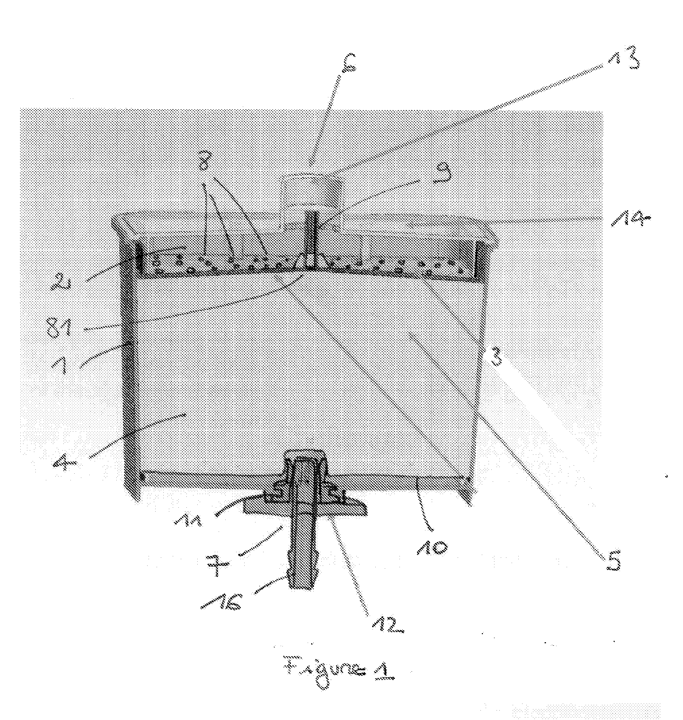

Figure 1 is as cross-section view of a water treatment unit comprising a compartment 1 with an upper water inlet 6 and a bottom water outlet 7. The compartment is divided in two parts by a water distribution plate 3. The upper part 2 is empty, whereas the lower part 4 is filled with a water treatment substance 5. The water distribution plate 3 is pierced by holes 8. At the centre of water distribution plate 2 a hole 81 faces the compartment upper water inlet and cooperates with a tube 9 that fits in the upper water inlet of the compartment. An inside filter element 10 is placed near from the bottom water inlet 7 for retaining the water treatment substance 5. A flexible valve 11 fits inside the water outlet 7 to enable connection with a tube 16 that is part of the beverage production machine. The upper wall of the compartment can be a removable cover 14 in order to facilitate the filling with the water treatment substance during the manufacturing of the water treatment unit. A plug 13 can be placed at the water inlet to keep it proper during storage and manipulation before use in the beverage production machine.

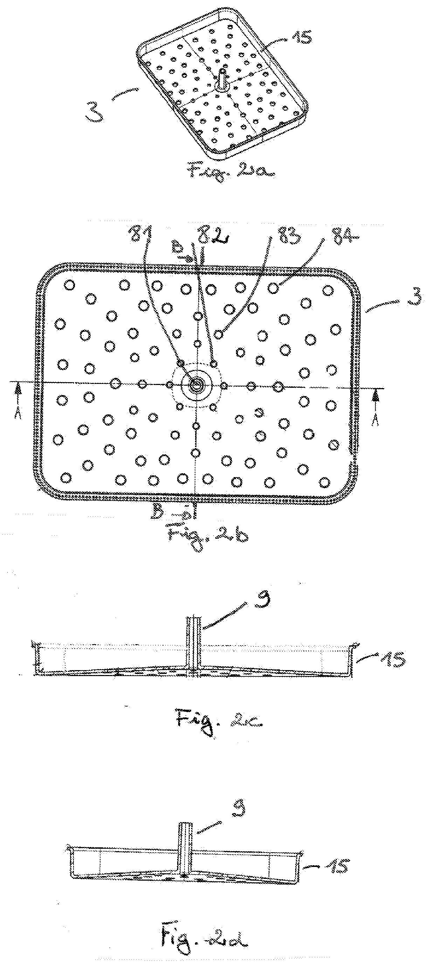

Figures 2a to 2d detail the features of the water distribution plate 3. As illustrated in Figures 2a and 2b, the water distribution plate 8 is pierced by holes 8, 81, 82, 83, 84 presenting a specific distribution inducing water to flow through the holes that are the more distant from the centre of the water distribution plate. To reach this aim, the section surface of the holes 82 placed near from the centre of the water distribution plate is smaller than the section surface of the holes 83 placed farther from the centre of the water distribution plate, and the section surface of said latter holes 83 is smaller than the section surface of the holes 84 placed even farther from the centre of the water distribution plate. The holes are distributed according to globally circular forms but any other form could be used. The holes are circular but any other form could be used too.

The surface of the water distribution plate 8 is inclined from its centre to its edges in all direction as illustrated by Figure 2c that is the cross section view of the water distribution plate 8 according to axis AA and by Figure 2d that is the cross section view of the water distribution plate 8 according to axis BB. The water distribution plate presents also a vertical flange 15 getting up around all sides of the plate and able to lean against the side wall of the compartment. This flange enables the correct placement of the compartment top wall at a certain distance from the water distribution plate.

In use the water treatment unit of the invention works as follows. The first time water is introduced in a new water treatment unit, water flows from the water inlet 6 in the upper part 2 of the compartment 1 and falls on the water distribution plate 3. Due to the inclination of the water distribution plate 3, water is driven in direction of the side walls of the compartment and due to the bigger section surface of the holes that are distant from the centre of the plate - where water is introduced - the same flow of water flows through the holes placed at the periphery of the plate as through the holes placed near from the plate centre and near from the water inlet. Consequently water progressively wets the water treatment substance 4. This progressive movement of water generated by the water distribution plate pushes air and orientates the movement of air : the air is pushed in direction of the centre of the compartment. Simultaneously at the centre, water flows through the holes 82 that are smaller and air is able to rise up near from the centre and reach the tube 9 to be evacuated from the water treatment unit. Then the first time the water treatment unit is used, the water distribution plate of the present invention enables an easy evacuation of air from the unit. Subsequently, when all air has been evacuated from the unit, water can homogeneously flows through all the height of the water treatment substance 4 thanks to the distribution of water by the water distribution plate 3. The water treatment substance 4 is uniformly used. The invention enables a longer and more efficient use of the water treatment unit.

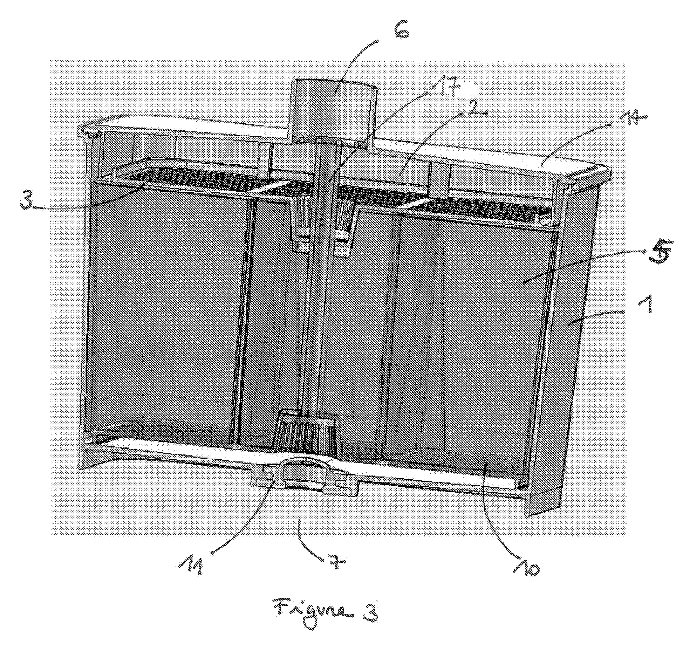

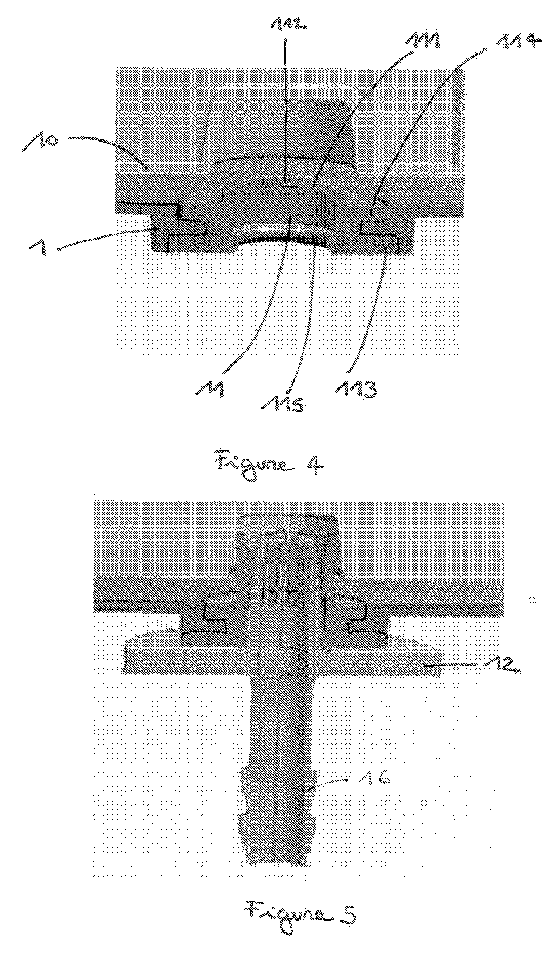

Figure 3 is a water treatment unit equivalent to the unit described in Figure 1 except that the tube for the evacuation of air has been suppressed. It has been replaced by a channel 17 enabling the direct feeding of a part of non-treated water from the water inlet 6 to the water outlet 7. The size of this channel inlet can be varied in order to control the ratio of non-treated water/treated water at the outlet of the water treatment unit, e.g. by using channels of different diameter or by placing a more or less pierced plug at the channel inlet._In Figure 5, the flexible valve 11 can be observed in its rest position that is its closed position. Such a valve is an efficient means for quickly closing the water treatment unit outlet when it is pulled out of the beverage production machine. Due to its flexible nature, the lips lean on the tube fitting as said tube fitting 12 is pulled out of the compartment water outlet 7. Then even if the compartment is still full of water when the cartridge is removed, no water drops through the bottom water outlet 7. The placement of a new water treatment unit in a beverage production machine is also very rapid and easy. The operator has just to centre the water treatment unit so that the tube fitting 12 enters in the valve slit.

Figures 4 and 5 depict the flexible valve of the present invention. In Figure 4, the flexible valve can be observed in its rest position that is when the water treatment unit has been removed from the machine. The valve has usually a circular plan shape. The valve seat 111 fits in the water outlet 7 of the compartment bottom wall. Preferably the valve seat 111 presents a curved surface, cambering in direction of the compartment inside. An orifice 112 is present at the centre of the valve seat 111. This orifice is a linear slit that extends through the top of the valve seat defining two opposite side faces. The two opposite side faces of the valve seat separated by the slit can flex outwardly to permit the tube 16 of the machine to enter in the compartment through the valve as illustrated in Figure 5. This slit is formed by slicing through the centre of the valve seat without removing any substantial amount of material therefrom so that the opposite side faces closely seal against one another when the tube 16 of the machine is removed from the valve as illustrated in Figure 4. The slit may assume different shapes, sizes and/or configurations in accordance with the form of the machine tube. For example, the valve seat may include two, three or more slits, particularly when larger machine tubes are used. Besides the valve presents two flanges 113, 114. The first flange 113 is present at the basis of the valve head 111 and leans on the inside compartment bottom wall. It prevents the valve from moving downwardly when the machine tube is removed from the water treatment unit. The second flange 114 is present at the basis of the valve 11 and leans on the outside compartment bottom wall. It prevents the valve from moving upwardly when the machine tube is inserted in the water treatment unit. The valve has an integrally formed one piece construction. It is preferably molded from a resilient flexible material like for example a silicone rubber which is substantially inert so as to avoid reaction with and/or adulteration of the treated water. The sealing with the tube is reinforced by the presence of a roll 115 at the internal basis of the valve. The machine tube 16 presents also a large flange 12 to improve sealing with the second flange 113 of the valve.

When the water treatment unit is removed from the beverage production machine, the flexible valve acts like a check valve and retains the water inside the compartment avoiding water that is still in the water treatment unit to escape. The removal of the water treatment unit is clean. When the water treatment unit is plugged in the beverage production machine, the flexible valve opens to allow water flow and the valve basis guarantees tight sealing with the machine.
- 1: compartment
- 2: upper part
- 3: water distribution plate
- 4: lower part
- 5: water treatment substance
- 6: top water inlet
- 7: bottom water outlet
- 8,81,82,83,84: holes
- 9: tube
- 10: filter element
- 11: valve
- 111: valve seat
- 112: orifice
- 113, 114: valve flange
- 115: roll
- 12: tube flange
- 13: plug
- 14: cover
- 15: flange
- 16: tube
- 17: channel

## Claims

1. A water treatment unit comprising :
- a compartment (1) presenting an upper water inlet (6) and a bottom water outlet (7),
- a water distribution plate (3) dividing the compartment in an upper part (2) and a lower part (3), said lower part containing a water treatment substance (4) and said water distribution plate presenting a plurality of holes (8), said plurality of holes having such a distribution that water introduced through the upper water inlet is induced to flow through the holes that are the more distant from the compartment upper water inlet (6).

2. A water treatment unit according to claim 1, wherein the distribution of the plurality of holes in the water distribution plate is such that the more distant are the holes from the compartment upper water inlet (6) the bigger their section surface is and/or the numerous they are.

3. A water treatment unit according to claim 2, wherein the holes present such a section surface that they retain the water treatment substance.

4. A water treatment unit according to any of the previous claims, wherein the holes present the form of grooves.

5. A water treatment unit according to any of the previous claims, wherein the hole (81) of the water distribution plate (3) facing the compartment upper water inlet (6) present a bigger section surface than the holes of the water distribution plate surrounding it.

6. A water treatment unit according to any of the previous claims, wherein the surface of the water distribution plate (3) is inclined from the point facing the compartment upper water inlet (6) to the edges.

7. A water treatment unit according to the previous claims, wherein the surface of the water distribution plate (3) is inclined from the point facing the compartment upper water inlet (6) to the edges according to an angle of at least 5°.

8. A water treatment unit according to any of the precedent claims wherein the compartment upper water inlet (6) is at the centre of the compartment top side.

9. A water treatment unit according to any of the precedent claims comprising a channel (17) linking a part of the water inlet (6) with the water outlet (7).

10. A water treatment unit according to any of the precedent claims wherein the compartment (1) presents a rectangular or square section.

11. A water treatment unit according to any of the precedent claims wherein the compartment (1) is divided in vertical sub-compartments under the water distribution plate (3).

12. A beverage production device comprising a water treatment unit according to claims 1 to 11 wherein the water inlet (6) cooperates with a water tank and the water outlet (7) cooperates with the water supply means of the beverage production device.

13. A water treatment unit comprising a compartment (1) presenting an upper water inlet (6) and a bottom water outlet (7), said compartment (1) containing a water treatment substance (4), and comprising a flexible valve (11) placed inside the bottom water outlet (7), said flexible valve (11) being openable by inserting a tube (16) from the outside through the valve and being closable by removing the tube from the valve.

14. A beverage production device according to Claim 13 wherein the tube (16) is part of water supply means of a beverage production device.

15. Use of a flexible valve (11) to close the water treatment unit compartment water outlet, said valve comprising :
- a valve head (111) presenting an orifice (112) extending through the valve head which opens to permit a tube inserts therethrough and closes to shut off fluid flow therethrough upon removal of the tube,
- a flange (113) near the valve head shaped to seal about the water treatment unit compartment water outlet (7),
- a valve flange (113) at the basis of the valve shaped to seal about the water treatment unit compartment water outlet (7).
